# EUROPEAN PATENT SPECIFICATION

(11) **EP 1 246 427 B1**
(45) Date of publication and mention of the grant of the patent: **27.02.2008**
(21) Application number: 02100228.2
(22) Date of filing: 06.03.2002
(51) Int. Cl.: H04L 29/06, H04L 12/28, H04N 7/24

(54) **Method for managing isochronous files in a havi environment**
Verfahren zur Verwaltung von Isochronen Daten in einer HAVi-Umgebung
Méthode de gestion de fichiers isochrones dans un environnement HAVi

(30) Priority: 08.03.2001 EP 01400612
(43) Date of publication of application: 02.10.2002
(73) Proprietor: Thomson Licensing, 92100 Boulogne-Billancourt (FR)
(72) Inventor: Macé, Gaél, Mr., 35850, Langan (FR); Autier, Ingrid, 35700, Rennes (FR); Tapie, Thierry, 35700, Rennes (FR)
(74) Representative: Kohrs, Martin

(56) References cited:
- EP-A- 0 969 628
- "The HAVi Specification: Specification of the Home Audio/Video Interoperabilty (HAVi) Architecture" HAVI SPECIFICATION, XX, XX, 19 November 1998 (1998-11-19), pages 1-384, XP002116332
- PATENT ABSTRACTS OF JAPAN vol. 1999, no. 12, 29 October 1999 (1999-10-29) & JP 11 203843 A (SONY CORP), 30 July 1999 (1999-07-30)

## Description

The Home Audio Video interoperability (HAVi) architecture is an attempt to accomplish high speed interconnectivity over an IEEE 1394 serial bus network for transacting audio/visual data. This initiative was specifically intended to address the needs of the consumer electronics devices to enable interactivity (with user involvement in a user-device interaction paradigm) and interoperability (with no user involvement in a device-device interaction paradigm). Further, within HAVi, there is a strong emphasis on enabling streaming applications in addition to control applications. An example of a streaming application would be an application transferring a video stream from a recording device to a decoder or display, while an example of a control application would be an application for programming the behavior of devices. This implies a support for both isochronous and asynchronous transactions.

For the purpose of managing isochronous streams, HAVi implements a stream manager which allows to set up isochronous connexions between functional components of one or more devices. Functional components can be controlled through Functional Component Modules, which have defined application programmable interfaces. One such Functional Component Module is the 'AVDisc' module, which is dedicated to the control of isochronous audio and/or video streams on a support such as a compact disc.

Because of its dedication to isochronous streams, the AVDisc module is not adapted to the management of hybrid isochronous and asynchronous data, or only asynchronous data. Such kind of data may for example be present on a hard disk or another type of recordable medium, used both for storing isochronous streams such as video, and asynchronous data, such as, in the case of a television application, program guide data. In its current version, HAVi does not specify a Functional Component Module for such a kind of functional component.

Furthermore, HAVi currently allows little control over the restarting of a file transfer once it has been aborted for various reasons.

The document EP 0 969 628 A2 describes an hybrid IEEE 1394 - radio network in which isochronous data may be transferred.

The object of the invention is a method for isochronous file transfer in a HAVi network, comprising the steps, at the level of a client application, of:
- requesting the opening of a connection between a client device and a source device;
- specifying a file to be transferred in isochronous manner over the connection;
characterized by the steps of:
- specifying a starting point, within said file, and from which the transfer is to be carried out;
- requesting initiation of the file transfer from the starting point.
The invention permits to restart transfer of an isochronous file from a point other than the beginning of the file.

Another object of the invention is a device for connection to a HAVi network, comprising:
- a recording medium for storing isochronous files;
- a functional component module providing an application programmable interface for access to said recording medium by a client
characterized in that
the application programmable interface comprises a method for transferring an isochronous file over an isochronous connection to the client starting from a starting point in the file, specified by the client.

A third object of the invention is a method for isochronous file transfer in a HAVi network, at the level of a source device comprising a recording medium for storing isochronous files, characterized by the steps of:
- receiving from a client a method call for transmitting an isochronous file over an isochronous connection with the client, from a starting point specified in the request;
- initiating the file transfer from the starting point.

The file manager functional component module permits handling of data storage media using file systems.

Other characteristics and advantages of the invention will appear through the description of a non-limiting embodiment, explained with the help of the enclosed drawings among which:
- figure 1 is a diagram of the software structure of a device according to the present embodiment;
- figure 2 is an example of a global directory built by a File Manager functional component module according a variant embodiment;
- figure 3 is a flowchart of the establishment of a global directory, according to the variant embodiment.

In order to provide background information to the reader, the present description includes the following three annexes:
- annex 1 is a list of reference documents, to which the reader can refer to for further information,
- annex 2 is a list of acronyms used in the present application,
- annex 3 is a glossary of terms used in the present application.

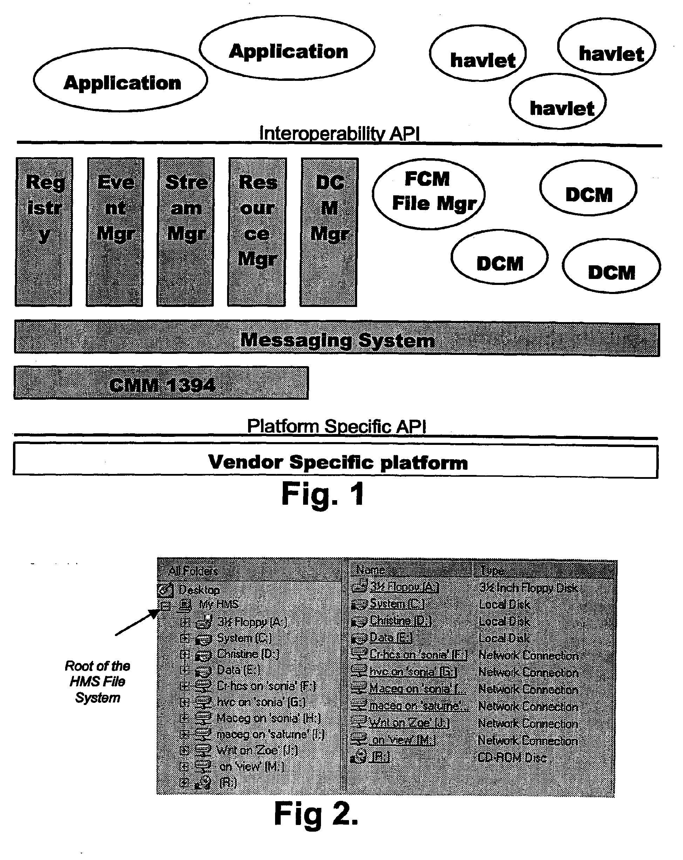

Figure 1 is a diagram of one type of HAVi-compliant device's software structure, according to the present embodiment. In addition to the known components of such a structure, the device further comprises a File Manager Functional Component Module, which is a software element providing an application programmable interface to other objects (which may be local or remote), in particular to applications, in order to control isochronous and asynchronous connections and files, as well as directories of a recording medium. According to the present embodiment, the recording medium of the device of figure 1 is a hard disc drive.

The File Manager FCM uses the service of the Stream Manager when establishing an isochronous connection.

Placing the File Manager at the level of a functional component module, as opposed to a service such as the Stream Manager, the Registry and the Resource Manager, has the advantage of allowing a certain backward compatibility. Indeed, if the File Manager were a service of the same type as the Stream Manager for example, it would be required to retrofit every Full A/V device in the network with a File Manager, since an application requiring such a service always has to make its request to a local service, which eventually dispatches the request to identical services of remote devices. As an FCM, the File Manager can be contacted by any application, be it a local application or one from a remote device. FCMs in remote devices may be discovered using the local Registry service, which has knowledge of local software elements, and the capacity to query remote Registries to obtain information about what software elements they registered.

According to the present embodiment, the File Manager Functional Component Module gives access to a recording medium which is part of the same device as the File Manager FCM itself.

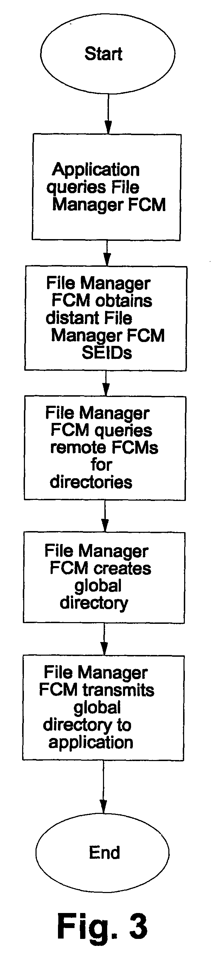

According to a variant embodiment, a File Manager Functional Component Module provides an image of all File Manager compatible devices on the network. To achieve this, it detects other File Manager FCMs - as an option, also AVDisc FCMs - in the network through its local Registry, obtains their identifier and then requests the directory tree of each of the corresponding devices to build a global directory. Such a global directory for a network is illustrated by figure 2. This way of proceeding has the advantage of avoiding having each application of a device query its local Registry by itself. An application need only exchange information with one File Manager FCM. The File Manager thus has a global network function, as a service such as the Stream Manager would have, but without the disadvantages cited above. Figure 3 is a flow chart of the procedure of establishing a global directory.

The Functional Component Module (FCM) application programmable interface (API) supports a set of common operations for non AV Disks that have a File System.

The File Manager FCM is designed for both bulk (isochronous) transfer and asynchronous stream transfer.

As described by figure 2, a connected client is able to navigate over all the drives of the network (local and logical and/or physical) related to the equipment.

Table 1 indicates the services provided by the file manager

**Table 1**

| **Service** | **Comm Type** | **Locality** | **Access** | **Resv Prot** |
|---|---|---|---|---|
| FileManager::IsoConnect | M | global | all | |
| FileManager::AsyncConnect | M | global | all | |
| FileManager:FileOpen | M | global | all | |
| FileManager::FileClose | M | global | all | |
| FileManager::Get | M | global | all | |
| <Client>::Get (This service is made available by the client) | MB | global | File System (all) | |
| FileManager::Put | M | global | all | |
| FileManager::Abort | M | global | all | |
| FileManager::Disconnect | M | global | all | |
| FileManager::ChDir | M | global | all | |
| FileManager::Rename | M | global | all | |
| FileManager::Del | M | global | all | |
| FileManager::RmDir | M | global | all | |
| FileManager::MkDir | M | global | all | |
| FileManager::PwD | M | global | all | |
| FileManager::Ls | M | global | all | |

### (1) The data structures of the file manager will now be described in detail.

### (a) FileLoc

### Prototype

```
             enum FileLoc {START, MIDDLE, END}
```

### Description

Indicates whether the message from a producer to a consumer is the first of a transfer (START), in the middle of a transfer (MIDDLE) or the last of a transfer (END). END is used if the transfer is accomplished in a single message.

### (b) FileSystemTransactionMode

### Prototype

```
             enum FileSystemTransactionMode {NONE, GET, PUT}
```

### Description

Indicates the transaction being processed for the currently open file. For an isochronous connection initialization, the NONE value is not available.

### (c) FileSystemOpenMode

### Prototype

```
             enum FileSystemOpenMode {NORMAL, APPEND,
 RESTART}
```

### Description

Define the mode for the connection open operation (Client → Server).

NORMAL: transfer a copy of the file, specified in the pathname. The status and content of the file at the server site shall be unaffected.

APPEND: If the file specified in the pathname exists at the server site, then the data shall be appended to that file; otherwise the file specified in the pathname shall be created at the server site.

RESTART: skips to the specified data checkpoint within the file. In case of an asynchronous connection, the open command (FileManager::FileOpen service call) shall be immediately followed by the appropriate service command that shall cause file transfer to resume. In case of an isochronous connection, this is not required, since opening the isochronous connection implicitly contains the appropriate service command.

### (2) The File Manager methods will now be described in detail.

### (a) FileManager::IsoConnect

### Prototype

```
     Status FileManager::IsoConnect (
                           in File System Transaction Mode transMode
                           in wstring fileName,
                           in FileSystemOpenMode open Mode,
                           in long restartPoint,
                           in ushort plugnum
                           out long cid)
```

### Parameter

transMode - Defines the transaction mode (Client → Server). Should not be NONE.

fileName - File name specifying the complete path for the file to transfer, if any.

openMode - Define the mode for the connection open operation.

RestartPoint - Offset (in bytes) from the beginning of the file at which the transfer is to be restarted. Relevant only for a RESTART open mode.

plugnum - plug number as established by the Stream Manager.

cid - identifier of the connection. It allows starting several connections from a single software component and also permits matching a response with a request.

### Description

This service allows a client software element to open an isochronous connection with a File Manager FCM, relying on Stream Manager facilities.

Before calling this FileManager::IsoConnect function, the client software element should first:
- use the Fcm::GetPlugCount and Dcm::GetPlugStatus methods to determine which plug of the File Manager FCM could be used for the connection between itself (client) and the File Manager.
- use the StreamManager::FlowTo method to create an isochronous stream connection between itself (client) and the File Manager.

Once the plugs have been connected by the Stream Manager, the client can call the FileManager::IsoConnect function to get an identifier for the File Manager connection. The stream set-up above is similar to that described in the HAVi specification (see annex) and one can refer to this document for further details.

Furthermore, The *restartPoint* parameter represents the server marker from which file transfer is to be restarted. This command does cause file transfer from the specified data checkpoint, in case one has been indicated.

Notice that the FileManager::FileOpen, FileManager::FileClose, FileManager::Get and FileManager::Put calls shall not be used in the isochronous transfer mode.

### Error code

- EINVALID_PARAMETER: the fileName doesn't exist and transMode is GET, restartPoint doesn't exist in fileName, transMode is NONE
- ERESOURCE_LIMIT: no more cids available, no additional thread can be created

### (b) FileManager:: AsyncConnect

### Prototype

```
     Status FileManager::AsyncConnect (
                    in long clientMessageMaxSize,
                    out long serverMessageMaxSize,
                    out long cid)
```

### Parameter

clientMessageMaxSize - indicates the maximum size (in bytes) of a message accepted by the client software element. The File Manager FCM will take this parameter into account during the sending, to the client software element, of incoming transfers (the reference being the File Manager).

serverMessageMaxSize - indicates the maximum size (in bytes) of a message accepted by the node in which the File Manager FCM resides. The client software element will take this parameter into account during the sending of outgoing transfers (the reference being the File Manager).

cid - identifier of the connection. It allows starting several connections from a single software component and also permits matching a response with a request.

### Description

This command allows a software element to open an asynchronous connection. Each *FileManager::AsyncConnect* allows the File Manager FCM to manage a context for each connected client (connection identifier and function to call in order to send data to its client).

### Error code

ERESOURCE_LIMIT: no more cid available cid, no new thread can be created

### (c) FileManager:: FileOpen

### Prototype

```
    Status FileManager::FileOpen (
                          in long cid,
                          in wstring fileName,
                          in FileSystemOpenMode mode,
                          in long restartPoint)
```

### Parameter

cid - identifier of the connection between the client application and the File Manager FCM (provided by a client application, which obtained it from the File Manager through an *AsyncConnect* call).

fileName - File name specifying the complete path for the file to transfer - if any (used only in the context of the *FileManager::Get* and *FileManager::Put* APIs).

mode - Defines the mode for the connection open operation (Client → Server).

restartPoint - Offset (in byte) from the beginning of the file from which the transfer is to be restarted. It is equal to "-1" if no restart is needed.

### Description

This command allows a software element to identify the file that will be transferred. A client cannot open several files at the same time within the same connection.

The *restartPoint* parameter represents the server marker at which file transfer is to be restarted. This parameter has no meaning if the file is not open in RESTART mode.

This command does not cause file transfer but skips over the file to the specified data checkpoint (if any). In this context, the appropriate following command (FileManager::Put, FileManager::Get) causes file transfer to resume.

### Error code

- EINVALID_PARAMETER: the cid parameter value doesn't exist, the cid was created for a isochronous connection, or the restartPoint doesn't exist in fileName and openMode is RESTART
- EACCESS_VIOLATION: the cid corresponds to a file which is already open, the fileName cannot be opened nor created, or the client is not allowed to access this connection

### (d) FileManager:: FileClose

### Prototype

```
     Status FileManager::FileClose ( in long cid )
```

### Parameter

cid - See (c) above.

### Description

This command allows a software element to terminate all operations previously done on a given file.

### Error code

- ECONNECTION: the cid doesn't exist, or the cid was created for an isochronous connection
- EACCESS_VIOLATION: no open file for cid connection, or the client is not allowed to access this connection

### (e) FileManager:: Get

### Prototype

```
     Status FileManager::Get ( in long cid,
                                        in OperationCode opCode)
```

### Parameter

cid - see (c) above.

opCode - the operation code provided by the client that the File Manager FCM will use to send any requested file. The client function identified by this operation code must be designed according to the *<Client>::Get API.*

### Description

This command causes the initialization of the server in order to accept the data that will be transferred (cf. <Client>::Get). If SUCCESS is returned, then the client will receive the content of the open file. The messages sent by the File Manager to transmit data to the client will have the opCode operation code (identifying the <Client>::Get service).

If the file associated with the specified connection was opened in the RESTART mode, then the File Manager FCM will send data starting at the restartPoint in the file. Otherwise, the file content will be entirely transferred.

### Error code

- EINVALID_PARAMETER: the cid doesn't exist, or the cid was created for a isochronous connection
- EACCESS_VIOLATION: no open file exists for this cid connection, previous file transfer is not complete for this connection, or the client is not allowed to access this connection
- EFILE_LOCKED: another client is writing data into the same file over another connection

### (f) <Client>:: Get

### Prototype

```
     Status <Client>::Get ( in long cid,
                                 in FileLoc where,
                                 in sequence<octet> data)
```

### Parameter

cid - see (c) above.

where - informs the software element client that the message contains the first, the last or a middle segment of the data to be transferred.

data - contains a part (a multi-segment transfer) or the entire data transferred for the connection identified by the *cid* parameter.

### Description

This command is used by the server (File Manager FCM) to transfer a copy of the file, specified in the pathname. The status and contents of the file at the server site shall be unaffected.

### Error code

- EINVALID_PARAMETER: cid is unknown to the client

### (g) FileManager:: Put

### Prototype

```
     Status FileManager::Put ( in long cid,
                                        in FileLoc where,
                                        in sequence<octet> data)
```

### Parameter

cid - see (c) above.

where - informs the software element client that the message contains the first, the last or a middle segment of the data to be transferred.

data - contains a part (in case of a multi-segment transfer) or the entire data transferred for the connection identified by the *cid* parameter.

### Description

This command causes the server to accept the data transferred via the data connection and to store the data as a file at the server site. If the file specified in the pathname exists at the server site, then its contents shall be replaced by the data being transferred. A new file is created at the server site if the file specified in the pathname does not already exist.

If the file associated with the specified connection was opened in NORMAL mode, and if the file location is START (or END when only one API call is necessary) then the previous file content is discarded.

If the file was opened in the RESTART mode, and if the file location is START (or END when only one API call is necessary) then the transfer will start at restartPoint. Any data previously stored is discarded, starting from the restartPoint.

### Error code

- EINVALID_PARAMETER: the cid doesn't exist, or the cid was created for a isochronous connection
- EACCESS_VIOLATION: no open file for the cid connection, the client is not allowed to write in the file, the previous file transfer is not completed for this connection, or the client is not allowed to access this connection
- EFILE_LOC: error for block position in file
- EFILE_LOCKED: another client is still reading file content or writing data to the same file.

### (h) FileManager:: Abort

### Prototype

```
    Status FileManager::Abort ( in long cid )
```

### Parameter

cid - identifier of the connection between the client application and the File Manager FCM (obtained by a client following an *AsyncConnect* or *IsoConnect* call).

### Description

This command tells the server (File Manager FCM) to abort the previous file transfer (FileManager::Put, <Client>::Get). No action is to be taken if the previous transfer has been completed.

### Error code

- EINVALID_PARAMETER: cid doesn't exist
- EACCESS_VIOLATION: the client is not allowed to access this connection

### (i) FileManager:: Disconnect

### Prototype

```
     Status FileManager::Disconnect ( in long cid )
```

### Parameter

cid - see (h) above.

### Description

This function allows a software element to close a File Manager connection. If an isochronous connection is open, the client application should drop the isochronous stream between itself and the File Manager FCM using the appropriate Stream Manager method.

### Error code

- EINVALID_PARAMETER: the cid doesn't exist
- EACCESS_VIOLATION: the client is not allowed to access this connection

### Remarks

Sending a FileManager::Disconnect message will abort any other action being performed. Once a client calls FileManager::Disconnect, the connection's cid may not be used any more.

### (j) FileManager:: ChDir

### Prototype

```
     Status FileManager::ChDir ( in long cid,
     in wstring newPathName )
```

### Parameter

cid - see (h) above.

newPathName - Pathname specifying a directory or other system dependent file group designator.

### Description

This command allows the user to work with a different directory for file storage or retrieval.

### Error code

- EINVALID_PARAMETER: the cid doesn't exist, or pathName doesn't exist or is empty
- EACCESS_VIOLATION: the client cannot access the specified directory, or the client is not allowed to access this connection

### (k) FileManager:: Rename

### Prototype

```
     Status FileManager::Rename ( in long cid,
     in wstring oldFileName,
     in wstring newFileName)
```

### Parameter

cid - see (h) above.

oldFileName - Old pathname of the file to be renamed.

newPathName - New pathname of the file.

### Description

This command causes a file to be renamed.

### Error code

- EINVALID_PARAMETER: the cid doesn't exist, the oldFileName doesn't exist, or the newFileName has a bad format
- EACCESS_VIOLATION: the client is not allowed to change the name of the file, the client is not allowed to access this connection, or the file is open

### (l) FileManager:: Del

### Prototype

```
     Status FileManager::Del ( in long cid,
     in wstring fileName )
```

### Parameter

fileName - File name specifying the complete path of the file to be deleted.

cid - see (h) above.

### Description

This command causes the file specified in the pathname to be deleted at the server site.

### Error code

- EINVALID_PARAMETER: the cid doesn't exist, or fileName doesn't exist
- EACCESS_VIOLATION: the client is not allowed to delete the file, the client is not allowed to access this connection, or the file is open

### (m) FileManager:: RmDir

### Prototype

```
     Status FileManager::RmDir ( in long cid,
     in wstring pathName )
```

### Parameter

pathName - Pathname specifying the directory to be deleted.

cid - see (h) above.

### Description

This command causes the directory specified in the pathname to be removed as a directory (if the pathname is absolute) or as a subdirectory of the current working directory (if the pathname is relative).

### Error code

- EINVALID_PARAMETER: the cid doesn't exist, or the pathName doesn't exist
- EACCESS_VIOLATION: the client is not allowed to delete the directory, the client is not allowed to access this connection, the directory is used in a connection

### (n) FileManager:: MkDir

### Prototype

```
     Status FileManager::MkDir ( in long cid,
      in wstring pathName )
```

### Parameter

pathName - Pathname specifying the directory to be created.

cid - see (h) above.

### Description

This command causes the directory specified in the pathname to be created as a directory (if the pathname is absolute) or as a subdirectory of the current working directory (if the pathname is relative).

### Error code

- EINVALID_PARAMETER: the cid doesn't exist, or the pathName already exists
- EACCESS_VIOLATION: the client is not allowed to create a directory, the client is not allowed to access this connection

### (o) FileManager:: Pwd

### Prototype

```
      Status FileManager::PwD ( in long cid,
      out wstring pathName )
```

### Parameter

pathName - Pathname specifying the current working directory.

cid - see (h) above.

### Description

This command causes the name of the current working directory to be returned in the reply.

### Error code

- EINVALID_PARAMETER: the cid doesn't exist, or the client is not allowed to access this connection

### (p) FileManager:: Ls

### Prototype

```
      Status FileManager::Ls ( in long cid, in wstring pattern,
      out sequence <wstring> fileNameList )
```

### Parameter

pattern - Pathname specifying the directory to be listed, or an expression indicating the list of files whose information must be returned. The pattern format is described in the Data description section of this document.

fileNameList - List of filename in the specified directory.

cid - see (h) above.

### Description

This command causes a list to be sent from the server (the File Manager FCM) to the passive client. If the pathname specifies a directory or other group of files, the server should transfer a list of files and/or directories in the specified directory. If the pathname specifies a file then the server should send current information on the file (type, size, owner, last modification date, etc.). An empty argument implies the user's current working directory. The data transfer is in ASCII type.

### Error code

- EINVALID_PARAMETER: the cid doesn't exist, the client is not allowed to access this connection, or the path is unknown

### Remarks

If pathName is empty or equal to ".", it represents the current directory. If pathName is a regular expression, it represents a list of files. In this case, each element in fileNameList represents information concerning a file.

In other cases, pathName represents either a file (with a file extension), or a directory (without file extension)

### (3) The File Manager Internal Data Structure will now be described.

### (a) FileSystemConnectionType

### Prototype

```
     enum FileSystemConnectionType {NONE, ISOCHRONOUS,
 ASYNCHRONOUS}
```

### Description

Defines the type of connection established between the client and the file manager. Value NONE corresponds to a connection that is under creation or destruction, and that cannot be used by a client.

### (b) FileSystemConnection

### Prototype

```
        struct FileSystemConnection
     {
              long cid;
              process_id pid;
              GUID clientGuid;
              semaphore_id connectionSem;
     FileSystemConnectionType connectionType;
               FileSystemTransactionMode currentAction;
               char
 pathName[MAX_PATHNAME_SIZE];
              char
 fileName[MAX_FILENAME_SIZE];
              long restartPoint;
              FileSystemOpenMode open Mode;
              int filePos;
              long clientMessageMaxSize;
       }
```

### Description

Client Managers and Connection Manager refer to connections described with the FileSystemConnection structure.

cid field is a connection identifier, given by the Connection Manager.

pid field is the process identifier of the Client Manager thread that will treat commands for this connection.

clientGuid field represents the device on which the client that created the connection is located.

connectionSem field is a semaphore used to access connectionType and currentAction fields. This semaphore is necessary because these two fields may be modified either by ConnectionMgr thread or by ClientMgr thread.

connection Type field indicates whether this is an isochronous or an asynchronous connection. This field is used by the Connection Manager or the Client Manager to check if a command can be performed. The NONE value means that either the connection is not initialized yet, or the connection is not available any more (after a FileManager::Disconnect command). This field enables the FileManager::disconnect command to have high priority on other commands.

currentAction field gives the command that is under process for the current open file. A NONE value (affected by the ConnectionMgr thread) means that the previous action has to be aborted.

pathName contains the name of the current directory for this connection.

fileName contains the name of the current open file for this connection. An empty value means that no file is open.

restartPoint field is the value of the restartPoint parameter given by the client with the FileManager::FileOpen command.

open Mode field is the value of the openMode parameter given by the client with the FileManager::FileOpen command.

filePos field contains the current position in the open file.

### (4) Data description

It is clear that the specific values given below are valid for the HAVi context and could be different in another context.

### (a) HAVi Software Element Type

This value is used by the File Manager FCM when registering in the Registry database:
**File Manager FCM** 0x8000 0000

### (b) API Code

**File Manager FCM** 0x8000

### (c) HAVI Operation Codes

These codes are given in Table 2

**Table 2**

| **HAVi Message** | **API Code** | **Operation ID** |
|---|---|---|
| **FileManager::IsoConnect** | 0x8000 | 0x00 |
| **FileManager::AsyncConnect** | 0x8000 | 0x01 |
| **FileManager::FileOpen** | 0x8000 | 0x02 |
| **FileManager::FileClose** | 0x8000 | 0x03 |
| **FileManager::Get** | 0x8000 | 0x04 |
| **FileManager::Put** | 0x8000 | 0x05 |
| **FileManager::Abort** | 0x8000 | 0x06 |
| **FileManager::Disconnect** | 0x8000 | 0x07 |
| **FileManager::ChDir** | 0x8000 | 0x08 |
| **FileManager::Rename** | 0x8000 | 0x09 |
| **FileManager::Del** | 0x8000 | 0x0a |
| **FileManager::RmDir** | 0x8000 | 0x0b |
| **FileManager::MkDir** | 0x8000 | 0x0c |
| **FileManager::Pwd** | 0x8000 | 0x0d |
| **FileManager::Ls** | 0x8000 | 0x0e |

### (d) Error Codes

Error codes are given by Table 3

**Table 3**

| **HAVi Error Name** | **API Code** | **Error Code** |
|---|---|---|
| **FileManager::EFILE_LOC** | 0x8000 | 0x80 |
| **FileManager::EFILE_LOCKED** | 0x8000 | 0x81 |

### (5) Examples of setting up file transfer

An asynchronous connection is established by first calling the 'AsyncConnect' method. The 'FileOpen' method is then used to specify the name of the file to be transferred. A 'Get' or 'Put' method is then called in order to retrieve, respectively send the file. The 'Abort' method may be used by the client application to interrupt a transfer. A 'FileClose' method call is used to close the file, while a 'Disconnect' method call is then used to terminate the connection.

While the connection is open, other method calls may be made when not file is open, to initiate a change of directory, rename a file etc... These methods do not necessarily require the context of an open file.

An isochronous connection is established in a slightly different manner. By calling the 'IsoConnect' method, a connection is established, a file is identified and the direction of the transfer is defined. Thus only one method is required to initiate the transfer. This can be done since in isochronous mode, it is not required to exchange input or output buffer size (i.e. maximum message length) before the transfer begins. The file is automatically closed when the transfer is finished. A 'disconnect' can then be used to terminate the connection.

In other systems, no packet repetition is provided for an isochronous data transfer. According to the present embodiment, further to a voluntary or involuntary interruption in the transfer of an isochronous file, the client application can restart the transfer from a data checkpoint it defines. The interruption may have different causes, be it at the level of the client application or the source device, or may simply be caused by a system shut down due to power failure. The checkpoint may be chosen as corresponding to the last piece of data correctly received.

The data checkpoint, passed as a parameter ('restartPoint') in the 'IsoConnect' method is, in the case of the present embodiment, an offset in bytes compared to the beginning of the file. The data checkpoint value is taken into account by the File Manager FCM only when the mode in which the isochronous connection is to be opened is the 'RESTART' mode, as defined in the 'FileSystemOpenMode' data structure.

### Annex 1: References

**[1] IEEE Standard for a High Performance Serial Bus**
   IEEE std 1394-1995 / 30 August 1996
**[2] File Transfer Protocol**
   RFC 765 / October 1985
**[3] The HAVi (Home Audio/Video interoperability) Specification**
   Version 1.0 / January 18, 2000

### Annex 2: Acronyms

| **Acronym** | **Description** | **Acronym** | **Description** |
|---|---|---|---|
| API | Application Program interface | HAVi | Home AudioNideo Interoperability |
| AV data | Audio / Video data | HMS | Home Media Server |
| BAT | Bouquet Association Table | IDE | Intelligent Drive Electronics (or Integrated Drive Electronics) |
| CAT | Conditional Access Table | IT data | Information Technology data |
| CMM | Communication Media Manager | NIT | Network Information Table |
| CMP | Communication Management Procedures | NTFS | NT File system |
| CSR | Command and Status Register | OS | Operating System |
| DCM | Device Control Module | PAT | Program Association Table |
| DVB | Digital Video Broadcasting | PMT | Program Map Table |
| DMA | Digital Memory Access | PCI | Peripheral Component Interconnect |
| EIT | Event Information Table | PCR | Plug Control Register |
| FAT | File Allocation Table | PMT | Program Map Table |
| FCM | Functional Component Module | SBM | Serial Bus Management |
| FCP | Function Control Protocol | SI | Service Information |
| FIFO | First In First Out | TAM | Transport Adaptation Module |
| FPGA | Field-Programmable Gate Array | TS | MPEG2 Transport Stream |
| FS | File System | UDF | Universal Disk Format |
| FM | File Manager | USB | Universal Serial Bus |
| FTP | File Transfer Protocol | | |

### Annex 3:

### (a) File System terminology

### File Allocation Table (FAT)

The file system used by DOS and Windows to manage files stored on hard disks, floppy disks, and other disk media.

### File Manager (FM)

Set of tools (APIs) allowing the use of storage media without any knowledge about the physical data organization.

### File System (FS)

Specification of the physical data organization on storage media (DVD, Hard Disk drive, ...) such an organization is intended for meeting various constraints (security, multiple access, real-time processing, etc.).

### File Transfer Protocol (FTP)

User-level oriented protocol for file transfer between host computers.

### (b) IEC 61883 terminology

### Connection Management Procedure (CMP)

Procedures that an application shall use to manage connections between input and output plugs of AV devices by modifying plug control registers (PCR).

### Function Control Protocol (FCP)

Various command sets and various command transactions designed to control devices connected through an IEEE 1394 bus.

### Plug Control Register (PCR)

Special purpose CSR registers manipulated by the connection management procedures (CMP) to control an isochronous data flow.

### (c) HAVi terminology

### Communication Media Manager (CMM)

A network dependent entity in HAVi architecture interfacing with the underlying communication media to provide services to each other HAVi components or application programs residing on the same device as itself.

### Device Control Module (DCM)

A HAVi software element providing an interface for controlling general functions of a device.

### Event Manager

A software entity in HAVi architecture providing an event delivery service. An event is a change of state of a software element or of the home network.

### Functional Component Module (FCM)

A HAVi software element providing an interface for controlling a specific functional component of a device.

### Home Audio/Video Interoperability (HAVi)

The HAVi architecture is intended for implementation on Consumer Electronics (CE) devices and computing devices in order to provide a set of services which facilitates interoperability and the development of distributed applications on home networks.

### Messaging System

A network and transport layers independent entity in HAVi architecture providing HAVi software element with communication facilities. It is also in charge of allocating identifiers (SEIDs) for the software elements of that device.

### Registry

A system service whose purpose is to manage a directory of software elements available within the home network. It provides an API to register and search for software elements.

### Resource Manager

A HAVi software entity taking over the guiding of software element competing for and using the set of resources in the network.

### Stream Manager

A software entity in HAVi architecture providing an easy to use API for configuring end-to-end isochronous ("streaming") connections.

### Transport Adaptation Module (TAM)

A medium dependent part of the Messaging system managing message fragmentation, and message ordering and, error recovery process.

## Claims

1. Method for isochronous file transfer in a HAVi network, comprising the steps, at the level of a client application, of:
- requesting the opening of a connection between a client device and a source device;
- specifying a file to be transferred in isochronous manner over the connection;
**characterized by** the steps of:
- specifying a starting point, within said file, and from which the transfer is to be carried out;
- requesting initiation of the file transfer from the starting point.

2. Method according to claim 1, wherein said request for initiation is made to a file manager functional component module for managing a file system of isochronous files and asynchronous files on recording media holding the file to be transferred, wherein said file manager functional component module provides an application programmable interface for access by said client application.

3. Device for connection to a HAVi network, comprising:
- a recording medium for storing isochronous files;- a functional component module providing an application programmable interface for access to said recording medium by a client
**characterized in that**
the application programmable interface comprises a method for transferring an isochronous file over an isochronous connection to the client starting from a starting point in the file, specified by the client.

4. Device according to claim 3, wherein the application programmable interface comprises:
methods for acting upon isochronous connections and files;
methods for acting upon asynchronous connections and files;
file type independent methods for acting upon both asynchronous and isochronous files.

5. Device according to claim 3 or 4, wherein the application programmable interface further comprises methods for acting upon directories of both asynchronous and isochronous files.

6. Method for isochronous file transfer in a HAVi network, at the level of a source device comprising a recording medium for storing isochronous files, **characterized by** the steps of:
- receiving from a client a method call for transmitting an isochronous file over an isochronous connection with the client, from a starting point specified in the request;
- initiating the file transfer from the starting point.

7. Method according to claim 6, wherein the called method is part of an application programmable interface of a file manager functional component module for managing the recording medium, further comprising the step of having the source device establish, using its local registry service, a global directory comprising directories of all file manager functional component module compatible devices in the network.

8. Method according to claim 7, further comprising the step of including directories of devices managed by an AVDisc functional component module in the global directory.

## Patentansprüche

1. Verfahren zur isochronen Dateiübertragung in einem HAVi-Netz mit den Schritten bei einer Clienten-Anwendung von:
- Anforderung der Öffnung einer Verbindung zwischen einem Clienten-Gerät und einem Quellengerät,
- Spezifizierung einer in isochroner Weise über die Verbindung zu übertragenden Datei,
**gekennzeichnet durch** folgende Schritte:
- Spezifizierung eines Startpunkts in der Datei, und von dem die Übertragung durchgeführt werden soll,
- Anforderung einer Initialisierung der Datenübertragung von dem Startpunkt.

2. Verfahren nach Anspruch 1, wobei die Anforderung für die Initialisierung für ein Daten-Manager-funktionales Komponentenmodul zur Verwaltung eines Dateisystems von isochronen Dateien und asynchronen Dateien auf einem Aufzeichnungsmedium erfolgt, das die zu übertragende Datei enthält, wobei das Datei-Manager-funktionale Komponentenmodul eine anwendungs-programmierbare Schnittstelle für den Zugriff durch die Clienten-Anwendung bildet.

3. Gerät zum Anschluß an ein HAVi Netz mit:
- einem Aufzeichnungsmedium zur Speicherung isochroner Dateien, einem funktionalen Komponentenmodul zur Bildung einer anwendungsprogrammierbaren Schnittstelle für den Zugriff zu dem Aufzeichnungsmedium durch einen Clienten,
**dadurch gekennzeichnet, dass**
die anwendungprogrammierbare Schnittstelle ein Verfahren zur Übertragung einer isochronen Datei über eine isochrone Verbindung zu dem Clienten, Starten von einem Startpunkt in der durch den Clienten spezifizierten Datei enthält.

4. Gerät nach Anspruch 3, wobei die anwendungsprogrammierbare Schnittstelle folgendes enthält:
Verfahren für die Verarbeitung bei isochronen Verbindungen und Dateien,
Verfahren für die Verarbeitung bei asynchronen Verbindungen und Dateien,
vom Dateityp unabhängige Verfahren zur Verarbeitung auf asynchronen und isochronen Dateien.

5. Gerät nach Anspruch 3 oder 4, wobei die anwendungsprogrammierbare Schnittstelle außerdem Verfahren zur Verarbeitung auf Verzeichnissen von asynchronen und isochronen Dateien enthält.

6. Verfahren zur isochronen Dateiübertragung in ein HAVi Netz bei einem Quellengerät mit einem Aufzeichnungsmedium zur Speicherung von isochronen Dateien, **gekennzeichnet durch** folgende Schritte:
- Empfang eines Verfahrensaufrufs für die Übertragung einer isochronen Datei von einem Clienten über eine isochrone Verbindung mit dem Clienten von einem in der Anforderung spezifizierten Startpunkt,
- Initialisierung der Dateiübertragung von dem Startpunkt.

7. Verfahren nach Anspruch 6, wobei das aufgerufene Verfahren Teil einer anwendungsprogrammierbaren Schnittstelle eines Dateimanagers-funktionalen Komponentenmoduls zur Verwaltung des Aufzeichnungsmediums ist, außerdem mit dem Schritt zur Bildung einer Quellendatei unter Anwendung seines lokalen Registrierservice bei einem globalen Verzeichnis mit Verzeichnissen von einem Datei-Verwaltungs-funktionalen Komponentenmodul, das mit den Geräten in dem Netz kompatibel ist.

8. Verfahren nach Anspruch 7 mit dem Schritt der Aufnahme von Verzeichnissen von Geräten, die durch ein AVDisc-funktionales Komponentenmodul in dem Gesamtverzeichnis verwaltet werden..

## Revendications

1. Procédé de transfert de fichier isochrone dans un réseau HAVi, au niveau de l'application client, comprenant les étapes de :
- d'ouverture d'une connexion entre un dispositif client et un dispositif source ;
- spécification d'un fichier à transférer d'une manière isochrone via la connexion ;
**caractérisé par** les étapes de :
- spécification d'un point de départ dans le fichier, à partir duquel effectuer le transfert ;
- demande de démarrage du transfert de fichier à partir du point de départ.

2. Procédé selon la revendication 1, dans lequel ladite requête de démarrage est envoyée vers un module de composante fonctionnelle de gestionnaire de fichiers pour gérer un système de fichiers isochrones et de fichiers asynchrones sur des supports d'enregistrement contenant le fichier à transférer, dans lequel ledit module de composante fonctionnelle de gestionnaire de fichiers fournit une interface programmable d'application pour fournir un accès à ladite application client.

3. Dispositif permettant la connexion à un réseau HAVi, comprenant :
- un support d'enregistrement pour le stockage de fichiers isochrones ;
- un module de composante fonctionnelle fournissant une interface programmable d'application pour accéder audit support d'enregistrement par un client,
**caractérisé en ce que**
l'interface programmable d'application comprend un procédé pour transférer un fichier isochrone via une connexion isochrone au client à partir du point de départ dans le fichier, spécifié par le client.

4. Dispositif selon la revendication 3, dans lequel l'interface programmable d'application comprend :
des procédés d'action sur les connexions et les fichiers isochrones ;
des procédés d'action sur les connexions et les fichiers asynchrones;
des procédés indépendants du type de fichier permettant d'agir à la fois sur des fichiers asynchrones et isochrones.

5. Un dispositif selon la revendication 3 ou 4, dans lequel l'interface programmable d'application comprend en outre des procédés d'action sur les répertoires de fichiers à la fois asynchrones et isochrones.

6. Procédé de transfert de fichier isochrone dans un réseau HAVi, au niveau d'un dispositif source comprenant un support d'enregistrement pour le stockage de fichiers isochrones, **caractérisé par** les étapes de :
- réception d'un client d'un appel de méthode pour transmettre un fichier isochrone via une connexion isochrone avec le client à partir d'un point spécifié dans la requête ;
- démarrage du transfert du fichier à partir du point de départ.

7. Procédé selon la revendication 6, dans lequel la méthode appelée fait partie d'une interface programmable d'application d'un module de composante fonctionnelle du gestionnaire de fichiers permettant de gérer le support d'enregistrement, comprenant en outre l'étape d'établissement du dispositif source à l'aide de son service de registre local, un répertoire global comprenant des répertoires de tous les dispositifs compatibles avec le module de composante fonctionnelle du gestionnaire de fichiers dans le réseau.

8. Procédé selon la revendication 7, comprenant en outre l'étape d'insertion de répertoires de dispositifs gérés par un module de composante fonctionnelle de disque AV dans le répertoire global.
